# EUROPÄISCHE PATENTSCHRIFT

(11) **EP 2 870 265 B1**
(45) Veröffentlichungstag und Bekanntmachung des Hinweises auf die Patenterteilung: **07.11.2018**
(21) Anmeldenummer: 13732076.8
(22) Anmeldetag: 06.05.2013
(51) Int. Cl.: C21B 7/10, F27B 1/24, F28F 3/12, F27D 1/12, F27D 9/00

(54) **KÜHLELEMENT FÜR EINEN SCHMELZOFEN UND VERFAHREN ZUR DESSEN HERSTELLUNG**
COOLING ELEMENT FOR A MELTING FURNACE AND PROCESS THEREFOR
ÉLÉMENT DE REFROIDISSEMENT POUR UN FOUR DE FUSION ET PROCÉDÉ DE FABRICATION

(30) Priorität: 09.07.2012 DE 102012013494
(43) Veröffentlichungstag der Anmeldung: 13.05.2015
(73) Patentinhaber: KME Germany GmbH & Co. KG, 49074 Osnabrück (DE)
(72) Erfinder: DRATNER, Christoph, 49080 Osnabrück (DE)
(74) Vertreter: Griepenstroh, Jörg
(86) Internationale Anmeldenummer: PCT/DE2013/000248
(87) Internationale Veröffentlichungsnummer: WO 2014/008877

(56) Entgegenhaltungen:
- EP-A1- 2 145 719
- WO-A1-2010/128197
- WO-A1-2013/135221
- DE-A1- 2 120 444
- DE-C1- 4 035 894
- JP-A- 2003 329 371
- US-A- 3 628 509
- US-A1- 2004 194 940

## Beschreibung

Die Erfindung betrifft ein Kühlelement für einen Schmelzofen gemäß den Merkmalen im Oberbegriff des Patentanspruchs 1.

Schmelzöfen bestehen in der Regel aus einem Gefäß aus Stahl. Zum Schutz des Stahlgefäßes werden wassergekühlte Elemente innen an der Wand des Gefäßes befestigt. Die Zwischenräume zwischen den wassergekühlten Elementen werden mit einer feuerfesten Masse ausgefüllt, zum Beispiel mit vorgeformten Steinen oder auch mit gegossener Masse. Auch die Fläche vor den Kühlelementen wird auf diese Weise abgeschirmt.

Der Stand der Technik wassergekühlter Kühlelemente lässt sich grob in zwei Alternativen gliedern. Zum einen gibt es flächige Kühlungen, welche im Wesentlichen die komplette Innenseite des Ofens bedecken. Diese Kühlelemente sind in der Regel aus Kupfer und bestehen aus einem Warmknetgefüge, das zur Durchleitung von Kühlwasser tiefgebohrt ist. Es sind auch Elemente aus Grauguss mit eingegossenen Rohren bekannt. Kühlelemente dieser Bauform werden gemeinhin als Staves bezeichnet (DE 29 07 511 C2).

Zum anderen gibt es spezielle Kühlelemente, die auch als Kühlkästen bezeichnet werden. Derartige Kühlkästen sind üblicherweise aus Kupferformguss (Sandguss) hergestellt. Sie bedecken die Ofenwand nicht vollständig, sondern nur partiell. Sie werden durch eine Öffnung, die zumeist rechteckig oder oval ist, von außen in den Ofenpanzer eingeschoben und können auch durch diese im Fall einer notwendigen Reparatur von außen wieder herausgezogen werden. Hierzu sind diese Elemente üblicherweise zum Ofeninneren hin trapezförmig verjüngt (DE 40 35 894 C1, WO 2010/128197 A1). Im Unterschied hierzu können Staves nur zum Ofeninneren hin ausgebaut werden, was einen Ofenstillstand voraussetzt.

Bei den von außen eingesetzten Kühlelementen sind in der Regel ein oder zwei unabhängig voneinander verlaufende Kühlkanäle vorgesehen. Die Kühlelemente werden gasdicht in den Ofenpanzer geschweißt. Da sich Kupfer und Stahl nur mit hohem Aufwand verschweißen lassen, werden die Kupferelemente im Bereich der Wanddurchführung mit einer Stahlmanschette versehen. Es kann zusätzlich auch eine Abschlussplatte vorgesehen sein. An dieser Abschlussplatte kann zum Beispiel eine Montageöse angeschweißt sein, um das Herausziehen des Elements aus der Ofenwand zu vereinfachen.

Gegossene Kupferkühlelemente, an denen ausführungsbedingt keine Warmumformung mehr durchgeführt werden kann, neigen aufgrund ihrer groben Kornstruktur zu Rissanfälligkeit bei thermischer Wechselbeanspruchung. Dies kann zu Wasseraustritt in den Schmelzofen führen. Der defekte Kreislauf muss abgestellt werden und das defekte Element kurzfristig ausgebaut werden. Ein weiterer Nachteil bei gegossen Kupferkühlelementen ist, dass im Sandgussverfahren Lunker vorkommen können.

Nicht zuletzt aus den vorstehenden Gründen wird in dem nachfolgend genannten Stand der Technik der Kupferanteil der Kühlelemente aus einem Warmknetgefüge hergestellt.

Die DE 40 35 894 C1 beschreibt ein Kühlelement, das aus einem oder mehreren gebogenen Rohren besteht und bei dem die Rohre mit einem Boden und einer Deckelplatte explosiv verschweißt werden. Bei diesem Verfahren werden das Rohr und die Deckelplatte kurzzeitig unter hohem Druck zusammengepresst, wobei sich die Bauteile an ihren Korngrenzen miteinander verbinden.

In der WO 2010/128197 A1 wird eine Ausführungsform eines Kühlelements aus Kühlrohren ohne Boden und ohne Deckelplatte beschrieben. Das besondere an dieser Ausführungsform ist, dass die Kühlrohre zumindest in vertikaler Richtung trapezförmig geformt sind, um den Ausbau zu vereinfachen. Der von dem Rohrboden umgebende Bereich wird mit feuerfester Masse ausgefüllt. Das hat jedoch den Nachteil, dass der Wärmeübergangswiderstand relativ hoch ist. Im Unterschied zu dem Kühlelement der DE 40 35 894 C1 besitzt nur die Oberfläche des Kühlelements einen geringen Wärmeübergangswiderstand, nicht jedoch der mit Feuerfestmasse gefüllte innere Bereich. Dieser besitzt eine erheblich geringere Leitfähigkeit als der Kupferteil und kann somit keine Kühlfunktion übernehmen. Die Hauptaufgabe der Kühlelemente, den Ofenpanzer vor der Wärmestrahlung des Schmelzprozesses zu schützen, wird nur unbefriedigend erfüllt.

Aber auch das in der DE 40 35 894 C1 beschriebene Beispiel eines Kühlkastens weist Nachteile auf, da durch das explosive Fügen des Deckelblechs mit den Kühlrohren keine Verschmelzung stattfindet und der Wärmeübergang daher beeinträchtigt ist.

Die DE 2 120 444 A1 offenbart ein Kühlelement für einen Schmelzofen mit einem Kühlrohr zur Durchleitung eines Kühlmittels. An einem plattenförmigen Tragelement sind beide Enden eines Walzstahlrohrs einheitlichen Durchmessers befestigt. Das von Kühlmittel durchströmte Element ist von einem Mantel ausgegossenem Kupfer umgeben. Über angeschweißte Deckelbleche wird der Zwischenraum zwischen den Enden des U-förmig verlaufenden Kühlelementes verschlossen, so dass sich in dem dadurch gebildeten Zwischenraum ein inneres Kühlelement befindet, was ebenfalls von Kühlmittel durchströmt ist.

Die US 3,628,509 A offenbart ein Kühlelement, bei welchem ein gebogenes Stahlrohr in eine U-Form mit einem plattenförmigen Tragelement verbunden ist. Oberseitig und unterseitig ist es durch eine aufgeschweißte Platte verschlossen. Das Kühlrohr besitzt über seine gesamte Länge einen gleichbleibenden Querschnitt. Hiervon ausgehend liegt der Erfindung die Aufgabe zugrunde, die vorstehend genannten Nachteile zu vermeiden und mithin ein Kühlelement aufzuzeigen, bei welchem der Wärmeübergangswiderstand reduziert ist. Ferner soll ein Verfahren zur Herstellung eines solchen Kühlelements aufgezeigt werden.

Diese Aufgabe ist bei einem Kühlelement mit den Merkmalen des Patentanspruchs 1 gelöst.

Das erfindungsgemäße Verfahren ist Gegenstand des Patentanspruchs 8.

Vorteilhafte Weiterbildungen der Erfindung sind Gegenstand der jeweils abhängigen Ansprüche.

Das erfindungsgemäße Kühlelement für einen Schmelzofen, insbesondere einen Hochofen, besitzt wenigstens ein Kühlrohr mit einem Kühlmittelkanal zur Durchleitung eines Kühlmittels. Bei dem Kühlmittel handelt es sich in der Regel um Wasser. Das Kühlelement besitzt ferner ein Tragelement, an welchem das wenigstens eine Kühlrohr befestigt ist. Zusätzlich ist mit dem wenigstens einen Kühlrohr wenigstens ein Deckelblech verschweißt.

Erfindungsgemäß ist vorgesehen, dass das wenigstens eine Kühlrohr wenigstens einen in Längsrichtung des wenigstens einen Kühlrohrs verlaufenden Wulst aufweist, mit welchem das wenigstens eine Deckelblech verschweißt ist. Das Kühlrohr hat mithin eine besondere Profilform, die es ermöglicht, das Deckelblech in besonderer Weise mit dem Kühlrohr zu verschweißen. Durch das Schweißen des Deckelblechs an das Kühlrohr bleibt die Gefügestruktur im Bereich der Rohrwand des Kühlrohrs erhalten. Es kommt zu keiner Schwächung des Materials im Bereich der Rohrwand bedingt durch die Verlagerung der thermischen Einflusszone des Schweißprozesses.

Außerdem kann die beim Schweißen entstehende Schweißnaht haltbarer und prozesssicherer an einer ebenen Oberfläche des Wulstes erzeugt werden, im Gegensatz zu einer gekrümmten Oberfläche des Rohres.

Die erfindungsgemäße Ausgestaltung des Kühlelements bringt also eine Optimierung des Fertigungsverfahrens mit sich, indem auf ein explosives Verschweißen verzichtet werden kann.

Ein Schweißen im Sinne der Erfindung ist ein Schmelzschweißen, bei welchem die beiden miteinander zu verschweißenden Bauteile im Bereich der Schweißnaht aufgeschmolzen und gegebenenfalls unter Hinzufügung eines Schweißwerkstoffes miteinander verbunden werden.

Ein Wulst ist eine sich in Längsrichtung des Kühlrohrs erstreckende Verdickung, wobei die Verdickung in Form des Wulstes ausschließlich die Funktion hat, als Schweißpartner für das Deckelblech zu dienen.

Im Rahmen der Erfindung besitzt das Kühlrohr zwei Wulste, so dass einander gegenüberliegende Deckelbleche mit den Wulsten verschweißt werden können. Die Wulste liegen sich mithin gegenüber.

Bevorzugt besteht auch das Deckelblech aus Kupfer oder einer Kupferlegierung, so dass ein Schweißprozess nicht auf vollkommen unterschiedliche Werkstoffe wie eine Paarung Kupfer - Stahl abzustellen ist. Erfindungsgemäß werden daher Kühlrohre aus Kupfer oder einer Kupferlegierung mit Deckelblechen aus Kupfer oder einem Kupferwerkstoff verschweißt.

Ein weiterer Vorteil des erfindungsgemäßen Kühlelements ist, dass nicht nur das Deckelblech an der Wärmeübertragung teilhat, sondern auch der Wulst, an welchem das jeweilige Deckelbech anliegt. Durch die Wulste wird zudem die an der Wärmeübertragung teilhabende Oberfläche des Kühlelements vergrößert.

Es ist im Rahmen der Erfindung möglich, dass das wenigstens eine Deckelblech mit der Wulst eines äußeren Kühlrohres verschweißt ist und ein benachbart zum äußeren Kühlrohr angeordnetes inneres Kühlrohr überspannt. Das bedeutet, dass das Kühlelement wenigstens zwei Kühlrohre, nämlich ein äußeres und mindestens ein inneres Kühlrohr besitzt. Durch das innere Kühlrohr kann das Deckelblech zusätzlich gekühlt werden, so dass insgesamt die Kühlleistung gesteigert wird.

Vorzugsweise besitzt auch das innere Kühlrohr einen Wulst, so dass das Deckelblech zweiteilig aufgebaut ist. Ein erster Teil des Deckelblechs wird zwischen die beiden im Wesentlichen parallel zueinander verlaufenden Wulste der inneren und äußeren Kühlrohre geschweißt. Ein innerer Teil des Deckelblechs wird ausschließlich mit dem Wulst des inneren Kühlrohrs verschweißt. In diesem Fall wird der Wulst des inneren Kühlrohrs nicht von dem Deckelblech überspannt, sondern ragt zwischen die einander angrenzenden ersten und zweiten Teilen des Deckelblechs, so dass der Wulst unmittelbar an der Wärmeübertragung teil hat und wiederum zur Vergrößerung der Oberfläche des Kühlelements beiträgt. Die Wärme wird über die Schweißnähte unmittelbar in das angeschweißte Deckelblech eingeleitet. Auch die Schweißnähte vergrößern die äußere Oberfläche des Kühlelements und tragen zur Wärmeübertragung bei.

Es wird als besonders vorteilhaft angesehen, wenn der wenigstens eine Wulst im Wesentlichen trapezförmig ausgebildet ist. Trapezförmig bedeutet in diesem Zusammenhang, dass der Wulst zwei im Winkel zueinander stehende Flanken hat, die vorzugsweise tangential in die gerundete Außenseite des Kühlrohrs übergehen. Die beiden Flanken treffen sich jedoch nicht in einer Spitze, sondern schneiden eine obere bzw. bezogen auf das Kühlrohr äußere Stirnfläche eines Trapezes. Die breitere Basis des Trapezes wird von der gekrümmten Rohrwandung gebildet. Die kürzere, äußere Stirnfläche des Trapezes liegt nach dem Anschweißen des Deckelblechs vorzugsweise zumindest teilweise in derselben Ebene wie die Außenseite des Deckelblechs. Der Vorteil der Trapezform und insbesondere der schräg gestellten Flanken ist, dass eine für das Schweißen günstige V-Naht geschaffen wird. Wenn nicht nur die seitliche Flanke des Wulstes schräg steht, sondern auch gleichzeitig die an das anzuschweißende Deckelblech angefast ist, ergibt sich eine ideale Schweißstoßvorbereitung.

Vorzugsweise treten die Deckelbleche nicht hinter den jeweiligen Wulst zurück. Es soll vermieden werden, dass der von dem Kühlrohr umgebene Bereich eine Hinterschneidung bildet, da dies beim Herausziehen des Kühlelements sehr hinderlich wäre. Es ist daher im Rahmen der Erfindung möglich, die Deckelbleche parallel, aber im hinreichend großen Abstand zueinander anzuordnen. Denkbar ist aber auch eine leicht konische Anordnung der Deckelbleche. Das heißt, dass die Deckelbleche in Einsteckrichtung des Kühlelements im Winkel zueinander stehen. Wenigstens eines der Deckelbleche kann daher im Winkel zur Einsteckrichtung angeordnet sein. Das gegenüberliegende Deckelblech kann parallel zur Einsteckrichtung angeordnet sein. Wenigstens eines der Deckelbleche ist daher in einem Winkel von bis zu 5° zur Einsteckrichtung geneigt angeordnet. Vorzugsweise liegt eine Außenseite des Deckelbleches zumindest teilweise in derselben Ebene wie eine von den Flanken des wenigstens einen trapezförmigen Wulstes begrenzte Stirnfläche, ohne hinter die Stirnfläche zurückzutreten. Die Deckelbleche sind bevorzugt als ebene Platten ausgebildet. Es ist im Rahmen der Erfindung aber auch möglich, Deckelbleche zu verwenden, die gekrümmt sind oder zumindest im Hinblick auf die Außenseite des Kühlelements einen hinterschneidungsfreien Verlauf besitzen, so dass das Kühlelement leicht aus dem Schmelzofen gezogen werden kann.

Das erfindungsgemäße Verfahren zur Herstellung eines solchen Kühlelements sieht vor, dass das wenigstens eine Kühlrohr aus einem gezogenen Hohlprofil aus Kupfer oder einer Kupferlegierung hergestellt ist.

Zusätzlich kann das Hohlprofil durch Pressen kalibriert sein.

Gezogene Hohlprofile lassen sich kostengünstig herstellen und ermöglichen es zudem, weitgehend beliebige Geometrien der Wulste zu realisieren.

Denkbar ist auch, dass in einer alternativen Ausführungsform das wenigstens eine Kühlrohr aus einer Stange hergestellt wird, welche im Querschnitt wenigstens einen sich in Längsrichtung der Stange erstreckenden Wulst aufweist, wobei ein sich in Längsrichtung erstreckender Kühlmittelkanal durch Bohren hergestellt wird. Während bei gezogenen Hohlprofilen die Herstellung des inneren Hohlraums einfacher ist als beim Bohren, erfolgt das Bohren von vornherein mit hoher Genauigkeit und kann bei relativ weichen Kupferwerkstoffen auch mit hoher Vorschubgeschwindigkeit durchgeführt werden. Anschließend werden die längsgebohrten Stangen bzw. gezogenen Hohlprofile in die gewünschte Form gebogen.

Das Verschweißen des wenigstens einen Kühlrohrs mit dem Deckelblech kann mittels eines Lichtbogenschweißverfahrens erfolgen. Auch das Reibrührschweißen ist ein geeignetes Verfahren, um das Deckelblech mit dem wenigstens einem Kühlrohr zu verbinden. Ebenso kommt das Elektronenstrahlschweißen in Frage. Das Deckelblech kann je nach Schweißverfahren zwischen die Wülste einander benachbarter Kühlrohrabschnitte geschweißt werden. Denkbar ist es bei mehreren im Wesentlichen parallel zueinander verlaufenden Kühlrohren, das Deckelblech auch nur mit dem Wulst eines äußeren Kühlrohrs zu verschweißen, wobei es ein benachbart zum äußeren Kühlrohr angeordnetes inneres Kühlrohr überspannt.

Der Freiraum zwischen einander gegenüberliegenden Deckelblechen kann mit einer feuerfesten Masse, insbesondere einer Gussmasse, ausgefüllt werden.

Der wesentliche Vorteil der Erfindung ist, dass die Deckelbleche mit Wulsten verschweißt werden, ohne dass der Schweißprozess bzw. die mit dem Schweißprozess verbundene Wärmeeinflusszone das Gefüge im Bereich der Wanddicke des Rohres schwächt. Ein weiterer Vorteil ist, dass auch über die entstehenden Schweißnähte die Deckelplatten direkt gekühlt werden.

Die Erfindung wird nachfolgend anhand von in den Zeichnungen schematisch dargestellten Ausführungsbeispielen näher erläutert. Es zeigt:
- Figur 1: eine perspektivische Darstellung einer ersten Ausführungsform eines Kühlelements;
- Figur 2: das Kühlelement der Figur 1 in einem Horizontalschnitt;
- Figur 3: einen Schnitt entlang der Linie III - III der Figur 2;
- Figur 4: ein Schnitt entlang der Line IV - IV der Figur 2;
- Figur 5: in vergrößerter Darstellung den Ausschnitt V der Figur 4;
- Figur 6: in perspektivischer Darstellung eine weitere Ausführungsform eines Kühlelements;
- Figur 7: das Kühlelement der Figur 6 in einem Horizontalschnitt und
- Figur 8: einen Querschnitt durch das Kühlelement der Figur 6 gemäß der Linie VIII - VIII in Figur 7.

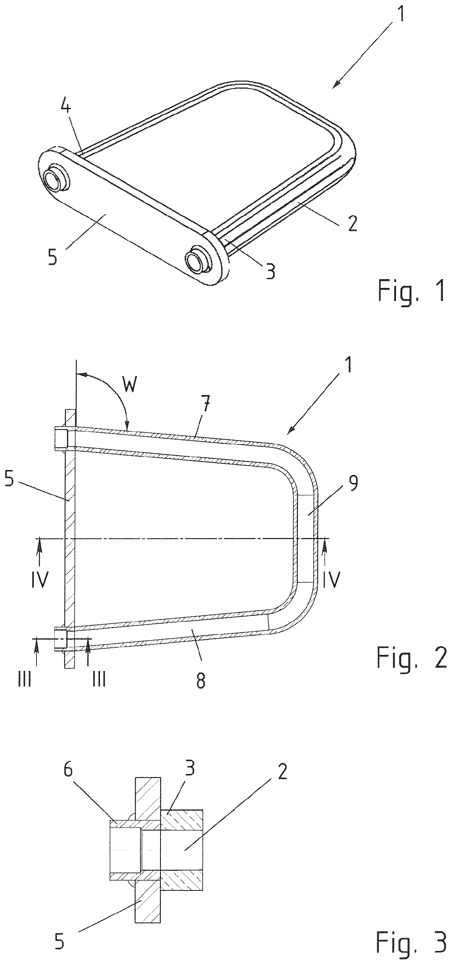

Figur 1 zeigt ein Kühlelement 1, welches dafür vorgesehen ist, in die Wandung eines Schmelzofens eingesetzt zu werden. Das Kühlelement 1 umfasst ein U-förmig gebogenes Kühlrohr 2, das in nicht näher dargestellter Weise den Ofenpanzer durchdringt und in das Innere des Ofens ragt. Das Kühlrohr 2 besitzt zwei Enden 3, 4, welche mit einem gemeinsamen plattenförmigen Tragelement 5 verbunden sind. Aus den Figuren 2 und 3 ist zu erkennen, dass das Kühlrohr 2 mit seinem Ende 3 das Tragelement 5 nicht durchsetzt, sondern lediglich an einer Öffnung des Tragelements 5 befestigt ist. In der Öffnung des Tragelements 5 ist ein Anschlussstutzen 6 schweißtechnisch befestigt. Der Anschlussstutzen 6 dient in nicht näher dargestellter Weise zur Kopplung mit weiteren Leitungsabschnitten.

Die Anschlussstutzen 6 bestehen bei diesem Ausführungsbeispiel aus Stahl, wohingegen das Kühlrohr 2 aus einem Kupferwerkstoff besteht. Zunächst wird der Anschlussstutzen 6 mit dem Kühlrohr 2 schweißtechnisch verbunden. Dies kann vorzugsweise mittels Reibschweißen erfolgen, da durch das Reibschweißen in besonders einfacher Weise Materialpaarungen unterschiedlicher Werkstoffe hergestellt werden können. Der so mit dem Kühlrohr 2 verbundene Anschlussstutzen 6 wird durch die Öffnung im plattenförmigen Tragelement 5 gesteckt. Das plattenförmige Tragelement 5 selbst besteht ebenfalls aus Stahl, so dass über die eingezeichnete Schweißnaht der Anschlussstutzen 6 auf der dem Kühlrohr 2 abgewandten Seite mit dem plattenförmigen Tragelement 5 fertigungstechnisch einfach günstig verschweißt werden kann. Hier liegt die Materialpaarung Stahl-Stahl vor. Alternativ ist es möglich, den Anschlussstutzen 6 nicht als separates Bauteil auszubilden, sondern das Kühlrohr 2 komplett durch die Öffnung des Tragelements 5 zu führen. Der Anschlussstutzen 6 wäre in diesem Fall materialeinheitlich einstückiger Bestandteil des Kühlrohrs 2 und wird über ein Schweißverfahren mit dem plattenförmigen Tragelement 5 verschweißt.

Figur 2 zeigt den Längsschnitt durch das Kühlelement 1, wobei zu erkennen ist, dass das U-förmig gebogene Kühlrohr 2 zwei Schenkel 7, 8 aufweist, die jeweils in einem Winkel W zum plattenförmigen Tragelement 5 stehen. Der Winkel W zwischen dem jeweiligen Schenkel 7 und dem plattenförmigen Tragelement 5 liegt in einem Bereich zwischen 91° und 97° und beträgt insbesondere 95°. Dadurch hat das Kühlelement 1 eine konische Form. Es kann dadurch leichter montiert und demontiert werden.

Die beiden Schenkel 7, 8 des Kühlrohrs 2 münden in einen Basisabschnitt 9 des Kühlrohrs 2, der entfernt von dem plattenförmigen Tragelement 5 parallel zum plattenförmigen Tragelement 5 verläuft. Die Übergänge zwischen den Schenkeln 7, 8 und dem Basisabschnitt 9 sind gerundet.

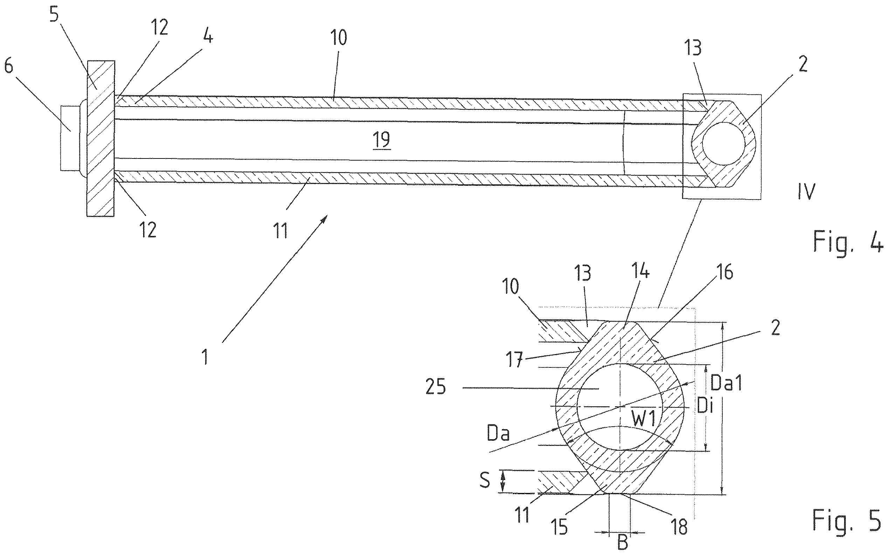

Aus Figur 4 ist zu erkennen, dass zwischen dem Kühlrohr 2 und dem plattenförmigen Tragelement 5 Deckelbleche 10, 11 angeordnet sind. Die Deckelbleche 10, 11 können als oberes und unteres Deckelblech bezeichnet werden und verlaufen bei diesem Ausführungsbeispiel parallel zueinander. Die Deckelbleche 10, 11 werden mit dem plattenförmigen Tragelement 5 bzw. dem Kühlrohr 2 verschweißt, zu erkennen an Schweißnähten 12, 13, die bei dem oberen Deckelblech 10 identisch zum unteren Deckelblech 11 verlaufen.

Aus der vergrößerten Darstellung der Figur 5 ist zu erkennen, dass das Kühlrohr 2 im Querschnitt nicht kreisrund ist, sondern diametral angeordnete Wulste 14, 15 besitzt. Die Wulste 14, 15 weisen in der Bildebene nach oben bzw. unten und sind mithin von dem plattenförmigen Tragelement 5 abgewandt. Die Wulste 14, 15 sind im Querschnitt trapezförmig konfiguriert. Die Wulste 14, 15 vergrößern die Wanddicke im Bereich der Wulste. In Figur 5 ist zu erkennen, dass der Innendurchmesser Di eines Kühlmittelkanals 25 von in diesem Ausführungsbeispiel 40 mm über den gesamten Umfang konstant bleibt. Der Außendurchmesser Da ist im zylindrischen Bereich des Kühlrohrs 2 ebenfalls konstant und beträgt bei diesem Ausführungsbeispiel 60 mm. Die Wanddicke ist im zylindrischen Bereich ebenfalls konstant und nimmt im Bereich der Wulste 14, 15 auf etwa das Doppelte zu. Das heißt, der Außendurchmesser Da1 beträgt im Bereich der Wulste 14, 15 etwa 80 mm. Die trapezförmigen Wulste 14, 15 besitzen dabei Schenkel 16, 17, die tangential von dem zylindrischen Bereich des Kühlrohrs 2 in die trapezförmigen Wulste 14, 15 übergehen. Die äußere Stirnfläche 18 der Wulste 14, 15 besitzt eine Breite B, die etwa der Wanddicke entspricht und mithin in der Größenordnung von 10 mm liegt.

Aufgrund der erheblichen Abmessungen der Wulste 14, 15 befindet sich die Schweißnaht 13 nicht im Kontaktbereich mit dem zylindrischen Umfangsabschnitt des Kühlrohrs 2, sondern ausschließlich im Kontakt mit den Wulsten 14, 15. Die Schenkel 16, 17 stehen in etwa in einem Winkel W1 von 70° bis 75°zueinander.

Die Dicke S der Deckelbleche 10, 11 entspricht in etwa der Dicke der Rohrwandung des Kühlrohrs 2, mithin etwa 10 mm. Es ist zu erkennen, dass die Schweißnaht 13 V-förmig verläuft und nach oben und unten nicht oder nicht wesentlich über die Höhe der Wulste 14, 15 vorsteht. Auch die Deckelbleche 10, 11 stehen aufgrund der Anordnung der Schweißnaht 13 neben den Wulsten 14, 15 nicht in der Höhe über diese vor, so dass sich die Deckelbleche 10, 11 gewissermaßen in dem von dem Innenraum des Kühlrohrs und dem plattenförmigen Tragelement 5 umspannten Raum befinden. Dieser Innenraum 19 kann zusätzlich mit einem Feuerfestmaterial ausgefüllt sein.

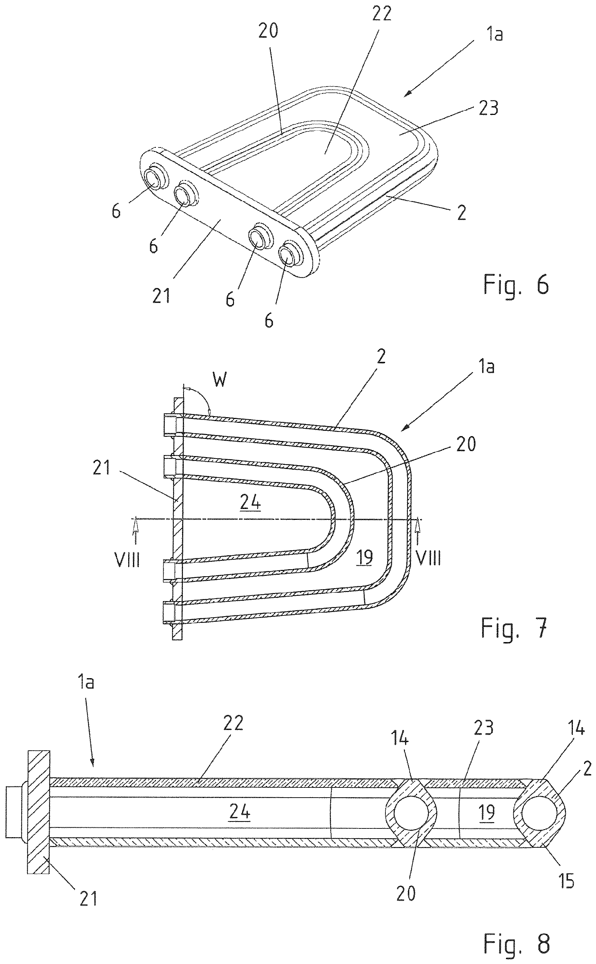

Die Ausführungsform der Figuren 6 bis 8 unterscheidet sich von derjenigen der Figuren 1 bis 6 dadurch, dass zusätzlich zu dem äußeren Kühlrohr 2 ein weiteres Kühlrohr 20 vorgesehen ist. Das zweite Kühlrohr 20 befindet sich gewissermaßen in dem Innenraum 19, der von dem ersten Kühlrohr 2 mit dem Tragelement 21 aufgespannt wird. Das zweite Kühlrohr 22 besitzt dieselbe Querschnittskonfiguration, so dass vorstehend auf die Erläuterung der Figur 5 Bezug genommen wird. Das zweite Kühlrohr 20 verläuft im Abstand zum ersten Kühlrohr 2, jedoch im Wesentlichen parallel zu dem ersten Kühlrohr. Mithin ist es ebenfalls U-förmig konfiguriert, wobei seine Enden wiederum an dem gemeinsamen Tragelement 21 befestigt sind. Aus Figur 6 ist zu erkennen, dass in dem Tragelement 21 mithin insgesamt vier identisch konfigurierte Anschlussstutzen 6 angeordnet sind. Auf die Erläuterung der Figur 3 wird in diesem Zusammenhang Bezug genommen.

Im Unterschied zu der ersten Ausführungsform besitzt diese Variante ein zweiteiliges Deckelblech, nachfolgend inneres und äußeres Deckelblech 22, 23 genannt. Das innere Deckelblech 22 überspannt einen Innenraum 24, der von dem inneren Kühlrohr 20 umgeben ist. Das äußere Deckelblech 22 ist gewissermaßen U-förmig konfiguriert und erstreckt sich zwischen den beiden benachbarten Kühlrohren 2, 20. Die jeweiligen Deckelbleche 22, 23 befinden sich identisch auf der Ober- und Unterseite des Kühlelements 1a und sind in der gleichen Weise befestigt, wie es vorstehend zu Figur 5 geschildert worden ist. Das Deckelblech 23 ist jedoch nunmehr mit zwei Kühlrohren 2, 20 verschweißt und nicht nur mit einem Kühlrohr 2, wie bei der Ausführungsform der Figur 1.

### Bezugszeichen:

- 1 -: Kühlelement
- 1a -: Kühlelement
- 2 -: Kühlrohr
- 3 -: Ende
- 4 -: Ende
- 5 -: plattenförmiges Tragelement
- 6 -: Anschlussstutzen
- 7 -: Schenkel
- 8 -: Schenkel
- 9 -: Basisabschnitt
- 10 -: Deckelblech
- 11 -: Deckelblech
- 12 -: Schweißnaht
- 13 -: Schweißnaht
- 14 -: Wulst
- 15 -: Wulst
- 16 -: Flanke
- 17 -: Flanke
- 18 -: Stirnfläche
- 19 -: Innenraum
- 20 -: Kühlrohr
- 21 -: Tragelement
- 22 -: Deckelblech
- 23 -: Deckelblech
- 24 -: Innenraum
- 25 -: Kühlmittelkanal
- B -: Breite
- Di -: Innendurchmesser
- Da -: Außendurchmesser
- Da1 -: Außendurchmesser
- S -: Dicke
- W -: Winkel
- W1 -: Winkel

## Patentansprüche

1. Kühlelement für einen Schmelzofen mit wenigstens einem Kühlrohr (2, 20), zur Durchleitung eines Kühlmittels, und mit einem plattenförmigen Tragelement (5, 21), an welchem beide Enden des wenigstens einen Kühlrohrs (2) befestigt sind, wobei mit dem wenigstens einen Kühlrohr (2, 20) Deckelbleche (10, 11; 22, 23) verschweißt sind, **dadurch gekennzeichnet, dass** das wenigstens eine Kühlrohr (2, 20) in Längsrichtung des wenigstens einen Kühlrohrs (2, 20) verlaufende, gegenüberliegende Wulste (14, 15) aufweist, mit welchen die gegenüberliegenden Deckelbleche (10, 11; 22, 23) verschweißt sind.

2. Kühlelement nach Anspruch 1, **dadurch gekennzeichnet, dass** die Deckelbleche (10, 11, 22, 23) aus Kupfer oder einer Kupferlegierung bestehen.

3. Kühlelement nach Anspruch 1 oder 2, **dadurch gekennzeichnet, dass** die Deckelbleche mit der Wulst eines äußeren Kühlrohres (2) verschweißt sind und ein benachbart zum äußeren Kühlrohr (2) angeordnetes, inneres Kühlrohr (20) überspannen.

4. Kühlelement nach einem der Ansprüche 1 bis 3, **dadurch gekennzeichnet, dass** die Wulste (14, 15) im Wesentlichen trapezförmig ausgebildet sind.

5. Kühlelement nach Anspruch 4, **dadurch gekennzeichnet, dass** die Wulste (14, 15) eine in Radialrichtung des Kühlrohres (2, 20) gemessene Dicke besitzen, die mindestens der Dicke (S) der angeschweißten Deckelbleche (10, 11, 22, 23) entspricht.

6. Kühlelement nach einem der Ansprüche 1 bis 5, **dadurch gekennzeichnet, dass** die Deckelbleche (10, 11, 22, 23) mit einer Flanke (16, 17) eines im Querschnitt trapezförmigen Wulstes (14, 15) verschweißt sind.

7. Kühlelement nach Anspruch 6, **dadurch gekennzeichnet, dass** eine Außenseite eines Deckelbleches (10, 11, 22, 23) zumindest teilweise in derselben Ebene liegt wie eine von den Flanken (16, 17) eines trapezförmigen Wulstes (14, 15) begrenzte Stirnfläche (18).

8. Verfahren zur Herstellung eines Kühlelements mit den Merkmalen von wenigstens einem der Patentansprüche 1 bis 7, bei welchem das wenigstens eine Kühlrohr (2, 20) aus einem gezogenen Hohlprofil aus Kupfer oder einer Kupferlegierung hergestellt wird.

9. Verfahren zur Herstellung eines Kühlelements mit den Merkmalen von wenigstens einem der Patentansprüche 1 bis 7, **dadurch gekennzeichnet, dass** das wenigstens eine Kühlrohr (2, 20) aus einer Stange hergestellt wird, welche im Querschnitt sich in Längsrichtung der Stange erstreckenden Wulste (14, 15) aufweist, wobei ein sich in Längsrichtung erstreckender Kühlmittelkanal durch Bohren hergestellt wird.

10. Verfahren nach Anspruch 8 oder 9, **dadurch gekennzeichnet, dass** das wenigstens eine Kühlrohr (2, 20) über ein Lichtbogenschweißverfahren mit den Deckelblechen (10, 11, 22, 23) verbunden wird.

11. Verfahren nach Anspruch 8 oder 9, **dadurch gekennzeichnet, dass** das wenigstens eine Kühlrohr (2, 20) mittels Reibrührschweißen mit den Deckelblechen (10, 11, 22, 23) verbunden wird.

12. Verfahren nach Anspruch 8 oder 9, **dadurch gekennzeichnet, dass** das wenigstens eine Kühlrohr (2, 20) mittels Elektronenstrahlschweißen mit den Deckelblechen (10, 11, 22, 23) verbunden wird.

13. Verfahren nach einem der Ansprüche 9 bis 13, **dadurch gekennzeichnet, dass** das Deckelblech (23) zwischen Wulste (14, 15) einander benachbarter Kühlrohre (2, 20) geschweißt wird.

14. Verfahren nach einem der Ansprüche 8 bis 12, **dadurch gekennzeichnet, dass** ein Deckelblech mit einem Wulst (14,15) eines äußeren Kühlrohres (2) verschweißt wird und ein benachbart zum äußeren Kühlrohr (2) angeordnetes, inneres Kühlrohr (20) überspannt.

## Claims

1. Cooling element for a melting furnace having at least one cooling pipe (2, 20) for the conveyance of a cooling means, and having a plate-shaped support element (5, 21) at which both ends of the at least one cooling pipe (2) are fastened, wherein with the at least one cooling pipe (2, 20) are welded cover plates (10, 11; 22, 23), **characterised in that** the at least one cooling pipe (2, 20) has extending in longitudinal direction of the at least one cooling pipe (2, 20) ridges (14, 15) with which the opposite lying cover plates (10, 11; 22, 23) are welded.

2. Cooling element according to claim 1, **characterised in that** the cover plates (10, 11, 22, 23) are made of copper or a copper alloy.

3. Cooling element according to claim 1 or 2, **characterised in that** the cover plates are welded with the ridge of an outer cooling pipe (2) and span an inner cooling pipe (20) which is disposed adjacent to the outer cooling pipe (2).

4. Cooling element according to one of claims 1 to 3, **characterised in that** the ridges (14, 15) are formed substantially trapezium-shaped.

5. Cooling element according to claim 4, **characterised in that** the ridges (14, 15) have a thickness measured in radial direction of the cooling pipe (2, 20) which is equal at least to the thickness (S) of the welded on cover plates (10, 11, 22, 23).

6. Cooling element according to one of claims 1 to 5, **characterised in that** the cover plates (10, 11, 22, 23) are welded with a flank (16, 17) of an in cross-section trapezium-shaped ridge (14, 15).

7. Cooling element according to claim 6, **characterised in that** an outer side of a cover plate (10, 11, 22, 23) lies at least partially in the same level as an endface (18) delimited by the flanks (16, 17) of a trapezium-shaped ridge (14, 15).

8. Method for manufacturing a cooling element with the characteristics of at least one of claims 1 to 7, in which the at least one cooling pipe (2, 20) is manufactured from a drawn out hollow profile made of copper or a copper alloy.

9. Method for manufacturing a cooling element with the characteristics of at least one of the claims 1 to 7, **characterised in that** the at least one cooling pipe (2, 20) is manufactured from a rod, which in cross-section has ridges (14, 15) extending in longitudinal direction of the rod, wherein a cooling means channel extending in longitudinal direction is produced by drilling.

10. Method according to claim 8 or 9, **characterised in that** the at least one cooling pipe (2, 20) is connected by means of an arc welding method with the cover plates (10, 11, 22, 23).

11. Method according to claim 8 or 9, **characterised in that** the at least one cooling pipe (2, 20) is connected by means of friction stir welding with the cover plates (10, 11, 22, 23).

12. Method according to claim 8 or 9, **characterised in that** the at least one cooling pipe (2, 20) is connected by means of electron beam welding with the cover plates (10, 11, 22, 23).

13. Method according to one of claims 9 to 13, **characterised in that** the cover plate (23) is welded between ridges (14, 15) of cooling pipes (2, 20) adjacent to one another.

14. Method according to one of claims 8 to 12, **characterised in that** a cover plate is welded with a ridge (14, 15) of an outer cooling pipe (2) and spans an inner cooling pipe (20) disposed adjacent to the outer cooling pipe (2).

## Revendications

1. Elément de refroidissement pour un four de fusion avec au moins un tuyau de refroidissement (2, 20), servant à acheminer un agent de refroidissement, et avec un élément porteur (5, 21) en forme de plaque, au niveau duquel les deux extrémités de l'au moins un tuyau de refroidissement (2) sont fixées, dans lequel des tôles formant couvercle (10, 11 ; 22, 23) sont assemblées par soudage à l'au moins un tuyau de refroidissement (2, 20), **caractérisé en ce que** l'au moins un tuyau de refroidissement (2, 20) présente des bourrelets (14, 15) opposés s'étendant dans la direction longitudinale de l'au moins un tuyau de refroidissement (2, 20), auxquels les tôles formant couvercle (10, 11 ; 22, 23) opposées sont assemblées par soudage.

2. Elément de refroidissement selon la revendication 1, **caractérisé en ce que** les tôles formant couvercle (10, 11, 22, 23) sont constituées de cuivre ou d'un alliage de cuivre.

3. Elément de refroidissement selon la revendication 1 ou 2, **caractérisé en ce que** les tôles formant couvercle sont assemblées par soudage au bourrelet d'un tuyau de refroidissement (2) extérieur, et recouvrent un tuyau de refroidissement (20) intérieur disposé de manière adjacente au tuyau de refroidissement extérieur (2).

4. Elément de refroidissement selon l'une quelconque des revendications 1 à 3, **caractérisé en ce que** les bourrelets (14, 15) sont réalisés sensiblement en forme de trapèze.

5. Elément de refroidissement selon la revendication 4, **caractérisé en ce que** les bourrelets (14, 15) possèdent une épaisseur mesurée dans la direction radiale du tuyau de refroidissement (2, 20), qui correspond au moins à l'épaisseur (S) des tôles formant couvercle (10, 11, 22, 23) installées par soudage.

6. Elément de refroidissement selon l'une quelconque des revendications 1 à 5, **caractérisé en ce que** les tôles formant couvercle (10, 11, 22, 23) sont assemblées par soudage à un flanc (16, 17) d'un bourrelet (14, 15) en forme de trapèze dans la section transversale.

7. Elément de refroidissement selon la revendication 6, **caractérisé en ce qu'**un côté extérieur d'une tôle formant couvercle (10, 11, 22, 23) se situe au moins en partie dans le même plan qu'une face frontale (18) délimitée par des flancs (16, 17) d'un bourrelet (14, 15) en forme de trapèze.

8. Procédé servant à fabriquer un élément de refroidissement avec les caractéristiques d'au moins une des revendications 1 à 7, où l'au moins un tuyau de refroidissement (2, 20) est fabriqué à partir d'un profil creux tiré en cuivre ou en un alliage de cuivre.

9. Procédé servant à fabriquer un élément de refroidissement avec les caractéristiques d'au moins une des revendications 1 à 7, **caractérisé en ce que** l'au moins un tuyau de refroidissement (2, 20) est fabriqué à partir d'une barre, qui présente dans la section transversale un bourrelet (14, 15) s'étendant dans la section transversale de la barre, dans lequel un canal d'agent de refroidissement s'étendant dans la direction longitudinale est fabriqué par perçage.

10. Procédé selon la revendication 8 ou 9, **caractérisé en ce que** l'au moins un tuyau de refroidissement (2, 20) est relié aux tôles formant couvercle (10, 11, 22, 23) par l'intermédiaire d'un procédé de soudage à l'arc électrique.

11. Procédé selon la revendication 8 ou 9, **caractérisé en ce que** l'au moins un tuyau de refroidissement (2, 20) est relié aux tôles formant couvercle (10, 11, 22, 23) au moyen d'un soudage par friction-agitation.

12. Procédé selon la revendication 8 ou 9, **caractérisé en ce que** l'au moins un tuyau de refroidissement (2, 20) est relié aux tôles formant couvercle (10, 11, 22, 23) au moyen d'un soudage par faisceau d'électrons.

13. Procédé selon l'une quelconque des revendications 9 à 13, **caractérisé en ce que** la tôle formant couvercle (23) est soudée entre des bourrelets (14, 15) de tuyaux de refroidissement (2, 20) adjacents les uns aux autres.

14. Procédé selon l'une quelconque des revendications 8 à 12, **caractérisé en ce qu'**une tôle formant couvercle est assemblée par soudage à un bourrelet (14, 15) d'un tuyau de refroidissement extérieur (2), et recouvre un tuyau de refroidissement intérieur (20) disposé de manière adjacente par rapport au tuyau de refroidissement extérieur (2).
